# FASCICULE DE BREVET EUROPEEN

(11) **EP 2 051 905 B1**
(45) Date de publication et mention de la délivrance du brevet: **08.08.2012**
(21) Numéro de dépôt: 07803801.5
(22) Date de dépôt: 28.06.2007
(51) Int. Cl.: B64C 1/06, B64C 1/10, B64C 1/26, B64D 11/00, B64D 11/04

(54) **CÔNE ARRIERE D'UN AVION**
HECKKONUS FÜR FLUGZEUG
AIRCRAFT TAIL CONE

(30) Priorité: 12.07.2006 FR 0606345
(43) Date de publication de la demande: 29.04.2009
(73) Titulaire: Airbus Operations, 31060 Toulouse (FR)
(72) Inventeur: GUERING, Bernard, F-31850 Montrabe (FR)
(74) Mandataire: Santarelli
(86) Numéro de dépôt international: PCT/FR2007/001092
(87) Numéro de publication internationale: WO 2008/006955

(56) Documents cités:
- US-A1- 4 055 317
- US-A1- 4 071 210
- US-A1- 2006 054 741
- US-B1- 6 273 363

## Description

L'invention a pour objet une disposition particulière d'un cône arrière d'avion. Un cône arrière de l'art antérieure est connu de US 6,273,363 B1.

D'une façon générale, un avion comporte un fuselage ayant une partie avant dans laquelle est ménagé un poste de pilotage, une partie principale qui porte les ailes et un cône arrière se terminant, habituellement, par une pointe et portant la dérive et l'empennage.

Dans le cas d'un avion de transport de passagers, au moins la partie principale du fuselage est séparée en deux zones superposées par un plancher formant pont principal, respectivement une zone supérieure pressurisée et climatisée dans laquelle est ménagée une cabine de passagers et une zone inférieure, normalement pressurisée mais non climatisée, formant une soute pour les bagages ou autres charges transportées.

Cet ensemble pressurisé est fermé, à l'arrière, par une paroi transversale formant un fond étanche et résistant à la différence de pression entre la cabine de passagers et la soute pressurisées et le cône arrière. Jusqu'à présent, cette paroi transversale était placée au début de la zone du fuselage portant la dérive. En effet, le cône arrière qui s'étend jusqu'à la queue de l'avion, sur toute la longueur couverte par la dérive et dont les dimensions, en section transversale, diminuent progressivement, était considéré comme un espace inutilisable pour les passagers et servait de soute ou d'espace de service, la queue du fuselage pouvant, cependant, être utilisée pour y placer un groupe auxiliaire de propulsion appelé « APU » (Auxiliary Power Unit).

Cependant, l'accroissement constant du trafic aérien conduit à augmenter les dimensions des avions, en particulier des avions de ligne servant pour les grandes distances. De plus, pour les trajets de longue durée, il est nécessaire d'améliorer le confort des passagers, en particulier en leur offrant des zones de détente. D'autres part, dans de tels avions, il faut également prévoir des espaces de repos et de détente pour l'équipage dont l'effectif est relativement important.

L'invention apporte une solution à de tels problèmes grâce à une utilisation plus judicieuse de l'espace interne du fuselage et, en particulier, du cône arrière.

L'invention propose alors un cône arrière d'un avion ayant un fuselage avec une pointe avant, une partie principale et un cône arrière portant une dérive et un empennage, ledit fuselage étant séparé en deux zones superposées par un plancher formant pont principal, respectivement une zone supérieure pressurisée et climatisée dans laquelle est ménagée une cabine de passagers, et une zone inférieure pressurisée formant une soute.

Selon l'invention, la zone supérieure pressurisée est prolongée dans le cône arrière par un espace pressurisé qui s'étend jusqu'à une paroi transversale étanche et résistante, placée dans la partie arrière de la portion de fuselage couverte par la dérive, ledit espace pressurisé constituant un local accessible aux personnes, et la zone supérieure pressurisée est prolongée dans le cône arrière par un espace pressurisé s'étendant sur la plus grande partie de la portion du fuselage couverte par la dérive, et un module de repos est disposé dans le cône arrière, la structure du fuselage présentant au moins deux couples successifs comportant des orifices de forme conjuguée à la forme extérieure du module de repos.

L'invention prévoit ainsi un espace pressurisé à l'arrière de l'avion dans lequel est aménagé un local de repos et qui peut également recevoir par exemple un salon et des sanitaires.

Dans le cas d'un avion comportant un groupe auxiliaire de propulsion placé à l'extrémité arrière du fuselage, l'espace pressurisé est prolongé de préférence jusqu'à une paroi transversale étanche placée directement en avant du groupe auxiliaire de propulsion. De cette manière, la taille de l'espace pressurisé à l'arrière de l'avion est maximale.

De façon particulièrement avantageuse, l'espace pressurisé du cône arrière est ménagé sur un plancher placé dans le prolongement du pont principal et s'élevant progressivement par degrés en allant vers l'arrière, de façon à suivre le profil inférieur du fuselage, tout en conservant une hauteur suffisante pour les personnes.

De préférence, l'extrémité arrière de la cabine de passagers est aménagée en une zone de détente pour les passagers.

Selon une autre caractéristique avantageuse, l'empennage arrière est fixé sur la dérive, de façon à ménager, dans le cône arrière, un volume maximal compatible avec un profil aérodynamique optimal.

Par ailleurs, le module de repos disposé dans le cône arrière peut comporter au moins deux étages d'alvéoles équipées de couchettes individuelles.

Avantageusement, ce module de repos peut être préfabriqué en usine et présentera et présente une forme extérieure parallélépipédique.

D'autres caractéristiques avantageuses de l'invention apparaîtront dans la description suivante d'un mode de réalisation particulier donné à titre d'exemple et représenté sur les dessins annexés.
La figure 1 est une vue en coupe longitudinale du cône arrière d'un avion confectionné selon l'invention.
La figure 2 est une vue en coupe longitudinale à échelle agrandie.
La figure 3 est une vue en coupe horizontale selon la ligne AA de la figure 2.
La figure 4 montre, en perspective, un exemple d'utilisation du cône arrière.
La figure 5 montre, en perspective, un exemple de module de repos.
La figure 6 est une vue en perspective du cône arrière, avec arraché partiel.

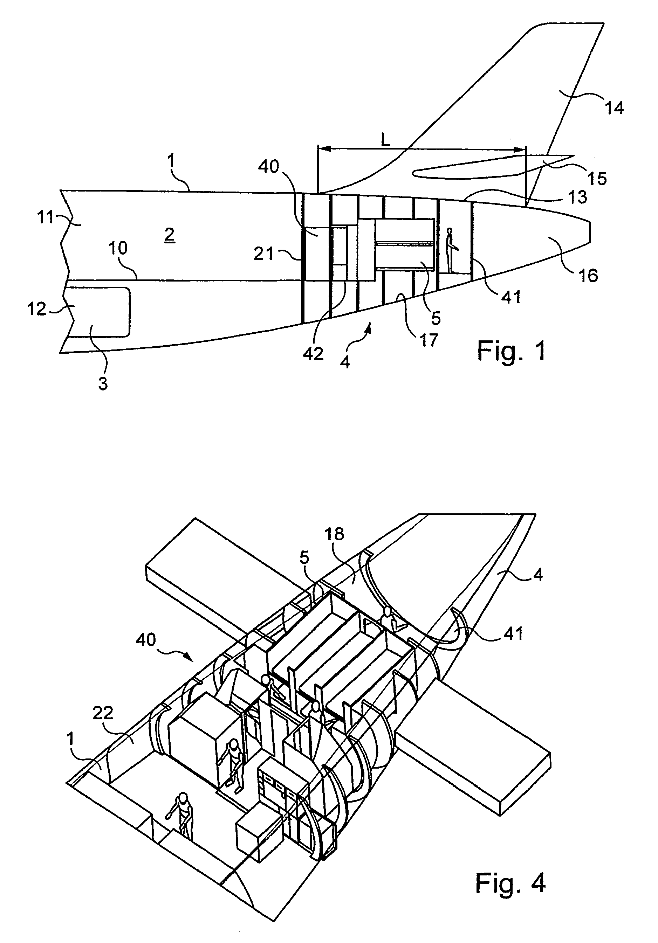

Sur la figure 1 on a représenté, en coupe longitudinale, le cône arrière 4 du fuselage 1 d'un avion séparé en deux zones par un plancher 10 formant pont principal, respectivement une zone supérieure 11 pressurisée et climatisée, dans laquelle est ménagée la cabine de passagers 2 et une zone inférieure 12 uniquement pressurisée formant une soute 3 pour les bagages et autres charges transportées.

Comme on l'a indiqué, les zones pressurisées doivent être fermées à leur extrémité arrière, par une paroi transversale étanche et résistante à la différence de pression entre la cabine-passagers 2 et l'extérieur.

Jusqu'à présent, compte tenu des dimensions habituelles, en hauteur, des fuselages, ce fond étanche était placé sensiblement au début de la partie 13 du fuselage portant la base de la dérive 14 et s'étendant sur une longueur L. Le cône arrière 4 non pressurisé, n'avait pas d'usage commercial.

Selon l'invention, en revanche, l'espace pressurisé est prolongé vers l'arrière, au-dessous de la dérive 14, par un espace 40 également pressurisé, qui peut s'étendre sur la plus grande partie, par exemple environ les deux tiers, de la longueur L couverte par la dérive 14, jusqu'à une cloison transversale 41, étanche et résistante, qui peut être placée directement en avant du groupe auxiliaire de propulsion 16 qui est souvent placé à la queue du fuselage.

Cet espace pressurisé 40 est ménagé au-dessus d'un plancher 42 dont la partie avant est placée dans le prolongement du pont principal 10 et qui peut s'élever progressivement par degrés en allant vers l'arrière, de façon à suivre le profil inférieur 17 du fuselage, tout en conservant une hauteur suffisante pour les personnes jusqu'à la cloison étanche 41, compte tenu de la hauteur nécessaire pour l'attache de la dérive le long de la partie supérieure 13 du fuselage.

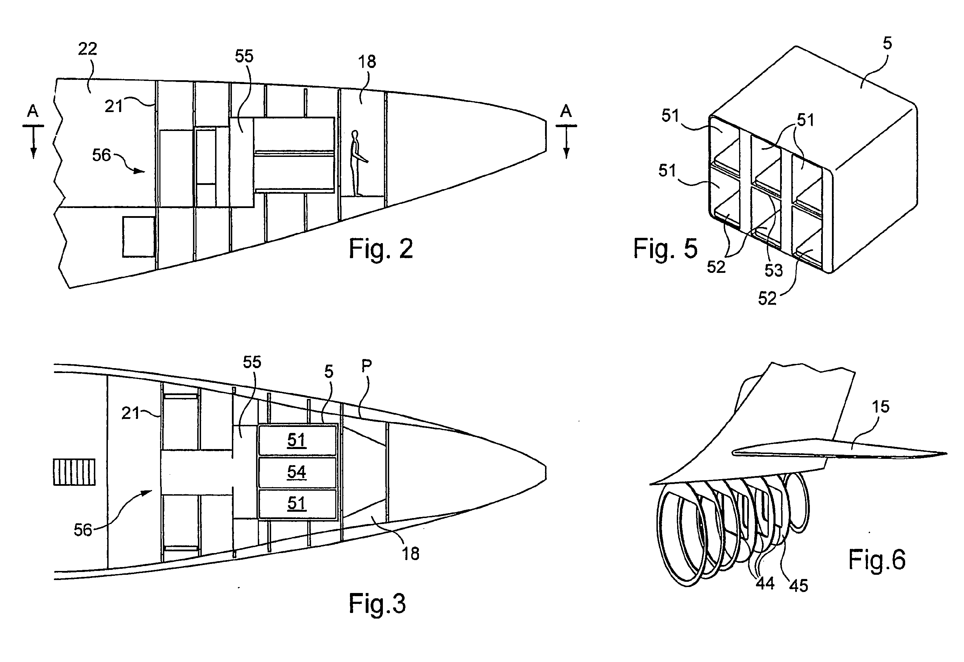

Comme le montrent les figures 2 et 3, cet espace pressurisé supplémentaire 40 peut servir avantageusement de local de repos pour l'équipage avec un salon, des couchettes et des sanitaires.

Dans le mode de réalisation préférentiel représenté sur les figures, ce local de repos comporte, en particulier, un module de couchage 5 constitué, de la façon représentée sur la figure 5, de plusieurs alvéoles 51 disposées l'une à côté de l'autre sur deux étages, et ayant chacune des dimensions longitudinales et transversales permettant de les équiper chacune d'une couchette individuelle 52. De préférence, le plancher 53 séparant les deux alvéoles centrales est rabattable de façon à ménager une coursive 54 (figure 3) permettant d'accéder, par exemple, à une zone technique 18 accessible, éventuellement en vol, et ménagée à l'extrémité arrière de l'espace pressurisé 40, juste en avant de la paroi étanche 41.

En avant du module de repos 5 peut être placé un dégagement 55 pour l'accès aux couchettes, avec des meubles de rangement et une zone de service 56 comportant, par exemple, un couloir central donnant accès à des sanitaires et, éventuellement à un petit salon pour l'équipage, ou bien à des meubles de rangement et de service.

Tout cet espace pressurisé 40 réservé à l'équipage peut être séparé de la cabine de passagers 2 par une cloison résistante 21 munie d'une porte blindée pour mettre l'équipage à l'abri en cas d'acte de piraterie, l'espace pressurisé 40 et la cabine de passagers 2, de même que le poste de pilotage placé à l'avant de l'avion, pouvant être équipés de circuits de pressurisation et de climatisation commandés séparément.

Comme le montrent les figures 5 et 6, le module de couchage 5 peut constituer un ensemble parallélépipédique, préfabriqué en usine, qui est enfilé dans des orifices 44 de forme rectangulaire conjuguée ménagés dans deux couples successifs 45 de la structure de l'avion.

Par ailleurs, un empennage 15 est prévu à l'arrière de l'avion. Alors qu'habituellement pour des avions du type de celui décrit ici, cet empennage est fixé sur le cône arrière, la présente invention propose une forme de réalisation avantageuse (figures1 et 6) dans laquelle l'empennage arrière 15 est fixé directement sur la base de la dérive 14. Ceci permet de supprimer le pincement arrière P représenté sur la figure 3, qui est habituellement nécessaire pour l'articulation du plan horizontal réglable de l'empennage arrière sur le fuselage 1. Il est ainsi possible d'élargir le cône arrière en lui donnant un volume maximal compatible avec un profil aérodynamique optimal du fuselage.

Le local de service 56 étant placé dans l'espace supplémentaire pressurisé 40, dans le cône arrière, la cabine-passagers 2 peut être allongée par un espace de détente 22 pour les passagers, permettant la station debout et dans lequel peuvent être placés des distributeurs en libre service et un coin café.

Bien entendu, l'invention ne se limite pas aux détails du mode de réalisation qui vient d'être décrit à titre de simple exemple, d'autres aménagements pouvant être réalisés pour utiliser judicieusement l'espace supplémentaire pressurisé 40 ménagé, ainsi, dans le cône arrière.

## Revendications

1. Cône arrière d'un avion ayant un fuselage (1) avec une pointe avant, une partie principale et un cône arrière (4) portant une dérive (14) et un empennage (15), ledit fuselage (1) étant séparé en deux zones superposées par un plancher (10) formant pont principal, respectivement une zone supérieure (11) pressurisée et climatisée dans laquelle est ménagée une cabine de passagers (2), et une zone inférieure (12) pressurisée formant une soute (3) la zone supérieure (11) pressurisée étant prolongée dans la cône arrière (4) par un espace pressurisé (40) qui s'étend jusqu'à une paroi transversale (41) étanche et résistante, placée dans la partie arrière de la portion (13) du fuselage couverte par la dérive (14), ledit espace pressurisé (40) constituant un local accessible aux personnes, et s'étendant sur la plus grande partie de la portion (13) du fuselage couverte par la dérive (14), **caractérisé par le fait qu'**un module de repos (5) est disposé dans le cône arrière dans ledit espace pressurisé, la structure du fuselage (1) présentant au moins deux couples successifs (45) comportant des orifices (44) de forme conjuguée à la forme extérieure du module de repos (5).

2. Cône arrière selon la revendication 1, pour un avion comportant un groupe auxiliaire de propulsion (16) placé à l'extrémité arrière du fuselage (1), **caractérisé par le fait que** l'espace pressurisé (40) est prolongé jusqu'à une paroi transversale étanche (41) placée directement en avant du groupe auxiliaire de propulsion (16).

3. Cône arrière d'un avion selon l'une des revendications 1 ou 2, **caractérisé par le fait que** l'espace pressurisé (40) du cône arrière (4) est ménagé sur un plancher (42) placé dans le prolongement du pont principal (10) et s'élevant progressivement par degrés en allant vers l'arrière, de façon à suivre le profil inférieur (17) du fuselage (1), tout en conservant une hauteur suffisante pour les personnes.

4. Cône arrière selon l'une des revendications précédentes, **caractérisé par le fait que** l'espace pressurisé (40) du cône arrière (4) comporte un local de repos pour l'équipage, avec des meubles de rangement et de service, des couchettes (5) et des sanitaires.

5. Cône arrière selon l'une des revendications précédentes, **caractérisé par le fait que** l'extrémité arrière de la cabine-passagers (2) est aménagée en zone de détente (22) pour les passagers.

6. Cône arrière selon l'une des revendications précédentes, **caractérisé par le fait que** l'empennage arrière (15) est fixé sur la dérive (14), de façon à ménager dans le cône arrière (4) un volume maximal compatible avec un profil aérodynamique optimal.

7. Cône arrière selon l'une des revendications précédentes, **caractérisé par le fait que** le module de repos comporte au moins deux étages d'alvéoles (51) équipées de couchettes individuelles (52).

8. Avion, **caractérisé en ce qu'**il comporte un cône arrière selon l'une des revendications 1 à 7.

## Claims

1. Rear cone of an aeroplane having a fuselage (1) with a front point, a main portion and a rear cone (4) bearing a fin (14) and a stabilizer (15), said fuselage (1) being separated into two superposed zones by a floor (10) forming a main deck, respectively a pressurized and air-conditioned upper zone (11) in which a passenger cabin (2) is arranged, and a pressurized lower zone (12) forming a hold (3), the pressurized upper zone (11) being continued in the rear cone (4) by a pressurized space (40) extending as far as a fluid-tight strong transverse wall (41), placed in the rear part of the portion (13) of the fuselage covered by the fin (14), said pressurized space (40) constituting an area accessible to persons, and extending over the greater part of the portion (13) of the fuselage covered by the fin (14), **characterized by** the fact that a rest module (5) is disposed in the rear cone in said pressurized space, the structure of the fuselage (1) having at least two successive formers (45) comprising apertures (44) shaped according to the external shape of the rest module (5).

2. Rear cone according to claim 1, for an aeroplane comprising an auxiliary power unit (16) placed at the rear end of the fuselage (1), **characterized by** the fact that the pressurized space (40) is continued as far as a fluid-tight transverse wall (41) placed directly ahead of the auxiliary power unit (16).

3. Rear cone of an aeroplane according to one of claims 1 and 2, **characterized by** the fact that the pressurized space (40) of the rear cone (4) is arranged on a floor (42) placed in line with the main deck (10) and rising gradually by steps going toward the rear, so as to follow the lower profile (17) of the fuselage (1), while maintaining a sufficient height for persons.

4. Rear cone according to one of the preceding claims, **characterized by** the fact that the pressurized space (40) of the rear cone (4) comprises a rest area for the crew, with storage and service furniture, berths (5) and bathroom facilities.

5. Rear cone according to one of the preceding claims, **characterized by** the fact that the rear end of the passenger cabin (2) is fitted out as a relaxation zone (22) for the passengers.

6. Rear cone according to one of the preceding claims, **characterized by** the fact that the rear stabilizer (15) is fastened to the fin (14), so as to provide in the rear cone (4) a maximum volume compatible with an optimal aerodynamic profile.

7. Rear cone according to one of the preceding claims, **characterized by** fact that the rest module comprises at least two levels of cells (51) equipped with individual berths (52).

8. Aeroplane, **characterized in that** it comprises a rear cone according to one of claims 1 to 7.

## Patentansprüche

1. Heckkonus eines Flugzeugs, das einen Rumpf (1) mit einer Bugspitze, einem Hauptteil und einem Heckkonus (4) aufweist, der ein Seitenleitwerk (14) und ein Höhenleitwerk (15) trägt, wobei der Rumpf (1) durch einen Boden (10), der ein Hauptdeck bildet, in zwei übereinanderliegende Zonen getrennt ist, und zwar jeweils eine obere Zone (11), die unter Druck gesetzt und klimatisiert ist und in der eine Passagierkabine (2) vorgesehen ist, und eine untere Zone (12), die unter Druck gesetzt ist und einen Frachtraum (3) bildet, wobei die unter Druck gesetzte obere Zone (11) in dem Heckkonus (4) durch einen unter Druck gesetzten Raum (40) verlängert ist, der sich bis zu einer luftdichten und widerstandsfähigen Querwand (41) erstreckt, die in dem hinteren Teil des Abschnitts (13) des Rumpfes, der durch das Seitenleitwerk (14) bedeckt ist, angeordnet ist, wobei der unter Druck gesetzte Raum (40) einen für Personen zugänglichen Ort bildet und sich über den größten Teil des Abschnitts (13) des durch das Seitenleitwerk (14) bedeckten Rumpfes erstreckt, **dadurch gekennzeichnet, dass**
in dem Heckkonus in dem unter Druck gesetzten Raum ein Ruhemodul (5) angeordnet ist, wobei die Struktur des Rumpfes (1) mindestens zwei aufeinanderfolgende Spante (45) aufweist, die Öffnungen (44) mit einer Form umfassen, die die Außenform des Ruhemoduls (5) wiedergibt.

2. Heckkonus nach Anspruch 1,
für ein Flugzeug, das ein Zusatzantriebsaggregat(16) umfasst, das an dem hinteren Ende des Rumpfes (1) angeordnet ist, **dadurch gekennzeichnet, dass** der unter Druck gesetzte Raum (40) bis zu einer luftdichten Querwand (41) verlängert ist, die direkt vor dem Zusatzantriebsaggregat (16) angeordnet ist.

3. Heckkonus für ein Flugzeug nach einem der Ansprüche 1 oder 2, **dadurch gekennzeichnet, dass** der unter Druck gesetzte Raum (40) des Heckkonus (4) mit einem Boden (42) versehen ist, der in der Verlängerung des Hauptdecks (10) angeordnet ist und sich fortschreitend stufenweise in Richtung des Hecks verlaufend auf eine Weise erhöht, die dem Innenprofil (17) des Rumpfes (1) folgt, um insgesamt eine ausreichende Höhe für die Personen zu gewährleisten.

4. Heckkonus nach einem der vorhergehenden Ansprüche,
**dadurch gekennzeichnet, dass** der unter Druck gesetzte Raum (40) des Heckkonus (4) einen Ruheort für die Besatzung mit Stau- und Nutzmöbeln, Betten (5) und Sanitäreinrichtungen umfasst.

5. Heckkonus nach einem der vorhergehenden Ansprüche,
**dadurch gekennzeichnet, dass** das hintere Ende der Passagierkabine (2) mit einer Entspannungszone (22) für die Passagiere ausgestattet ist.

6. Heckkonus nach einem der vorhergehenden Ansprüche,
**dadurch gekennzeichnet, dass** das Heckhöhenleitwerk (15) an dem Seitenleitwerk (14) auf eine solche Weise befestigt ist, dass in dem Heckkonus (4) ein maximales, mit einem aerodynamisch optimalen Profil vereinbares Volumen vorgesehen ist.

7. Heckkonus nach einem der vorhergehenden Ansprüche,
**dadurch gekennzeichnet, dass** das Ruhemodul mindestens zwei Zellenetagen (51) umfasst, die mit einzelnen Betten (52) ausgestattet sind.

8. Flugzeug, **dadurch gekennzeichnet, dass** es einen Heckkonus nach einem der Ansprüche 1 bis 7 umfasst.
